# EUROPÄISCHE PATENTSCHRIFT

(11) **EP 0 640 540 B1**
(45) Veröffentlichungstag und Bekanntmachung des Hinweises auf die Patenterteilung: **10.11.1999**
(21) Anmeldenummer: 94113516.2
(22) Anmeldetag: 30.08.1994
(51) Int. Cl.: B65G 13/075

(54) **Vorrichtung und Verfahren zum Fördern von Stückgut auf parallel und drehbar gelagerten Rollen**
Apparatus and method for conveying articles on parallel and turnable beared rollers
Dispositif et procédé pour convoyer des articles sur des rouleaux parallèles et à émerillon rotatif

(30) Priorität: 31.08.1993 DE 4329303; 06.11.1993 DE 4337967
(43) Veröffentlichungstag der Anmeldung: 01.03.1995
(73) Patentinhaber: Steiff Fördertechnik GmbH, D-89530 Giengen/Brenz (DE)
(72) Erfinder: Bräuning, Heinz, D-89537 Giengen-Hürben (DE)
(74) Vertreter: Hiebsch, Gerhard F., Dipl.-Ing.

(56) Entgegenhaltungen:
- DE-A- 2 033 238
- DE-A- 4 041 548
- US-A- 2 194 219
- US-A- 4 383 598

## Beschreibung

Die Erfindung betrifft eine Vorrichtung zum Fördern von Stückgut auf parallel und drehbar gelagerten Rollen einer Rollenbahn, wobei eine Gruppe aus mehreren einander benachbarten Rollen von einer in Förderrichtung verlaufenden Bremseinrichtung untergriffen ist, die von einem Kraftspeicher -- insbesondere einer Kolben/Zylinder-Einheit -- bewegbar sowie an die Rollen der Gruppe kraftschlüssig anlegbar ist, wobei mehrere Gruppen von Rollen mit jeweils einer sie unterfangenden Bremseinrichtung hintereinandergeschaltet sind. Zudem erfaßt die Erfindung ein Förderverfahren.

Rollenförderer sind beispielsweise für Fertigungsstraßen bekannt, wobei angestoßene Fördergüter über nicht angetriebene Rollen laufen oder Fördergüter von angetriebenen Rollen bewegt werden. Als Nachteil hat sich u.a. gezeigt, daß bei Verklemmen oder anderweitigem Stillstand eines Fördergutes ein Staudruck entsteht, der einen kontinuierlichen Betrieb der Fördervorrichtung nicht gewährleistet.

Eine gattungsgemäße Fördervorrichtung gemäß Oberbegriff von Anspruch 1 offenbart die DE-A-2 033 238. Die US-PS 21 94 219 zeigt eine andere Fördervorrichtung mit einem unterhalb der Rollenbahn ihrerseits auf Tragrollen gelagerten Bremseinrichtung, die auf den Tragrollen durch die Kolbenstange eines mit einem Fluid beaufschlagten Zylinders parallel zur Rollenbahn hin und her zu bewegen ist. Die Bremseinrichtung selbst besteht aus einer auf den Tragrollen aufliegenden sowie zwischen seitlichen Rahmenprofilen geführten Sockelrinne und einem in dieser auf vertikal wirkenden Federn gelagerten Hubrinne mit nach oben weisender Reibungsfläche. Um die Bremseinrichtung von den Rollen zu lösen, wird sie von dem Zylinder in eine Ruhelage gezogen, in der die Tragrollen in Rasteinformungen an der Unterseite der Sockelrinne einfahren.

In Kenntnis dieses Standes der Technik hat sich der Erfinder die Aufgabe gestellt, eine Vorrichtung der eingangs erwähnten Art zu verbessern, insbesondere die Beeinflussung des Staudruckes zu vereinfachen.

Zur Lösung dieser Aufgabe führt die Lehre des unabhängigen Patentanspruches; die Unteransprüche geben besonders günstige Weiterentwicklungen an.

Erfindungsgemäß ist die balkenartige Bremseinrichtung während einer Hubbewegung an wenigstens einem Paar zu ihr geneigter Keilflächen geführt. Die -- bevorzugt in Drehrichtung der Rollen aufwärts -- geneigten Keilflächen gleiten auf Gegengleitflächen der Vorrichtung und gewährleisten einen sicheren Hub der bevorzugt als Druckbalken ausgestalteten Bremseinrichtung.

Nach einem weiteren bevorzugten Merkmal der Erfindung ist zumindest eine der Gruppen mit einer elektronischen Überwachungseinrichtung -- beispielsweise einer Lichtschranke -- ausgestattet, mittels deren bei Förderstau ein Signal für eine Steuerung auslösbar ist, wobei die Bremseinrichtung bei einem solchen Förderstau von der Steuerung betätigt wird.

Dank dieser Maßgabe wird eine vollautomatische Stauregelung erreicht; bei dem erwähnten Förderstau wird vom auflastenden Stückgut ein Signal erzeugt, das ein Ansteuern jener Bremseinrichtung auslöst.

Von Bedeutung ist zudem, daß die Steuerung an der in Förderrichtung vordersten Gruppe oder Sektion erfolgen soll; die nachfolgenden Gruppen können dann von dieser vorderen Sektion intern gesteuert werden - d.h. das Steuersignal wird nach hinten weitergeleitet.

Mit der Steuerung ist jener -- bevorzugt in an sich bekannter Weise -- als Kolben/Zylinder-Einheit ausgebildete Kraftspeicher verbunden und wird von dieser bei Förderstau betätigt. Zur sicheren Führung des Druckbalkens soll erfindungsgemäß der Kolben des Kraftspeichers etwa parallel zu den Keilflächen geneigt verschiebbar sein. Dank dieser Maßgaben können die angetriebenen Rollen in Abhängigkeit vom Förderfluß ohne weiteres sanft gebremst werden.

Im Rahmen der Erfindung liegt ein Strangpreßprofil als Teil der Seitenwand, das mit einer Profilrinne od.dgl. Ansatz einen Aufnahmeraum für den Druckbalken einerseits oder den Rollenantrieb anderseits anbietet.

Vorteilhafterweise sind Stirnräder der Rollen jeder Gruppe durch einen Förderstrang angetrieben, der die fluchtenden Stirnräder form- oder reibschlüssig tangiert, beispielsweise als endlose Antriebskette, deren Obertrum mit Zähnen der Stirnräder zusammenwirkt.

Der endlose Fördersteg läuft bevorzugt in einem Einsatzprofil um, das austauschbar in einer Haltenut eines vom Strangpreßprofil abragenden Nutschenkels festliegt.

Entsteht durch das Anhalten eines Fördergutes ein Stauvorgang, wird jede Sektion über einen Sensor berührungslos abgefragt. Das Logikelement überprüft, ob der in Förderrichtung folgende Stauplatz frei oder belegt ist. Ist der Platz frei, wird das Fördergut weitergefördert, ist der Platz jedoch belegt, wird der Kraftspeicher durch das Logikelement angesteuert. Der Druckbalken wird an die Rollen gepreßt und das Fördergut auf der Sektion angehalten. Gleichzeitig wird das Belegt-Signal an den nächsten Stauplatz weitergegeben.

Weitere Vorteile, vorteilhafte Merkmale und Einzelheiten der Erfindung ergeben sich aus der nachfolgenden Beschreibung eines bevorzugten Ausführungsbeispieles sowie anhand der Zeichnung; diese zeigt in
- Fig. 1:: die Draufsicht auf eine Gruppe von Rollen der Rollenbahn einer Fördervorrichtung;
- Fig. 2:: eine Seitenansicht einer teilweise geschnittenen Gruppe von drehenden Rollen der Rollenbahn;
- Fig. 3:: die der Fig. 2 entsprechende Seitenansicht mit gebremsten Rollen;
- Fig. 4:: einen gegenüber Fig. 1 bis 3 vergrößerten, etwa in Linie IV-IV der Fig. 1 verlaufenden Querschnitt durch die Rollenbahn;
- Fig. 5:: einen Teil der Fig. 4 in geänderter Betriebsstellung;
- Fig. 6:: einen Abschnitt einer teilweise geschnittenen Rolle in vergrößerter Seitenansicht;
- Fig. 7:: eine skizzenhafte Seitenansicht mehrerer Gruppen der Rollenbahn bei einem Stau im vorderen -- rechten - - Bereich des dargestellten Abschnittes der Fördervorrichtung;
- Fig. 8:: die Wiedergabe entsprechend Fig. 7 bei einem Stau am hinteren Bereich des wiedergegebenen Abschnittes.

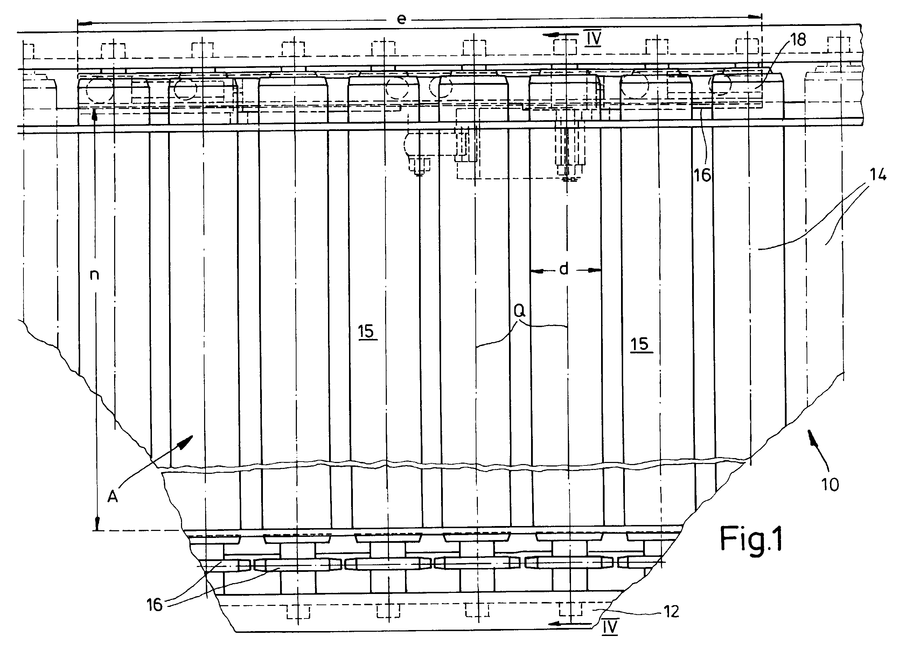

Eine Rollenbahn 10 eines aus Gründen der Übersichtlichkeit ansonsten nicht dargestellten Friktionsstaurollenförderers als Fördervorrichtung weist gemäß Fig. 1 eine Vielzahl von beidseits in Seitenwänden 12 mit parallelen Rollenlängsachsen Q gelagerten Rollen 14 auf. Diese Rollen 14 -- der beispielsweisen wirksamen Länge n von 350 mm bei einem Durchmesser d von 40 mm -- werden mittels eines in Fig. 1 nicht wiedergegebenen Antriebes gedreht, der mechanisch an miteinander fluchtenden Stirnrädern 16 der Rollen 14 angreift.

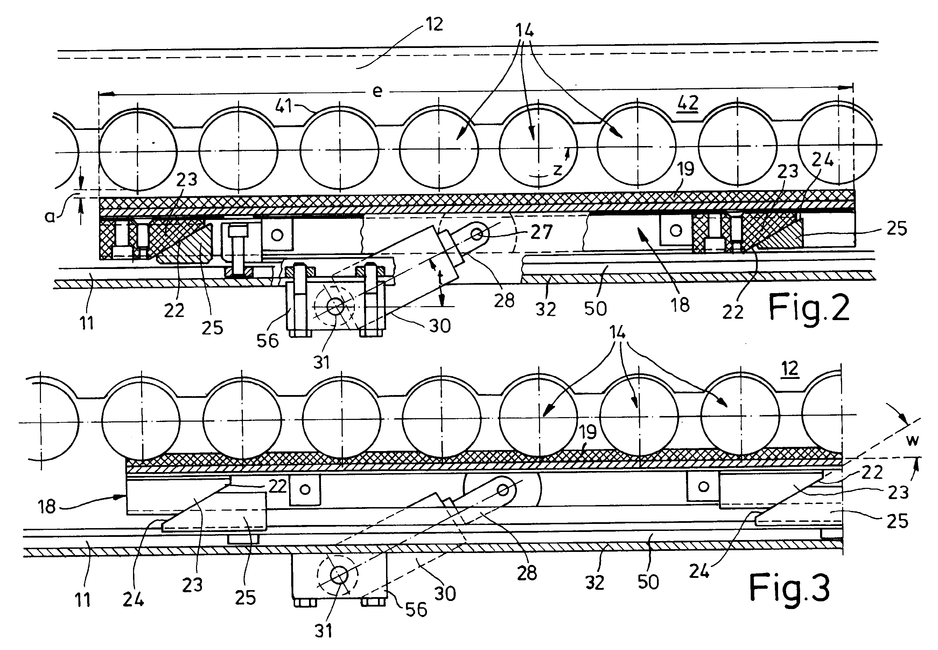

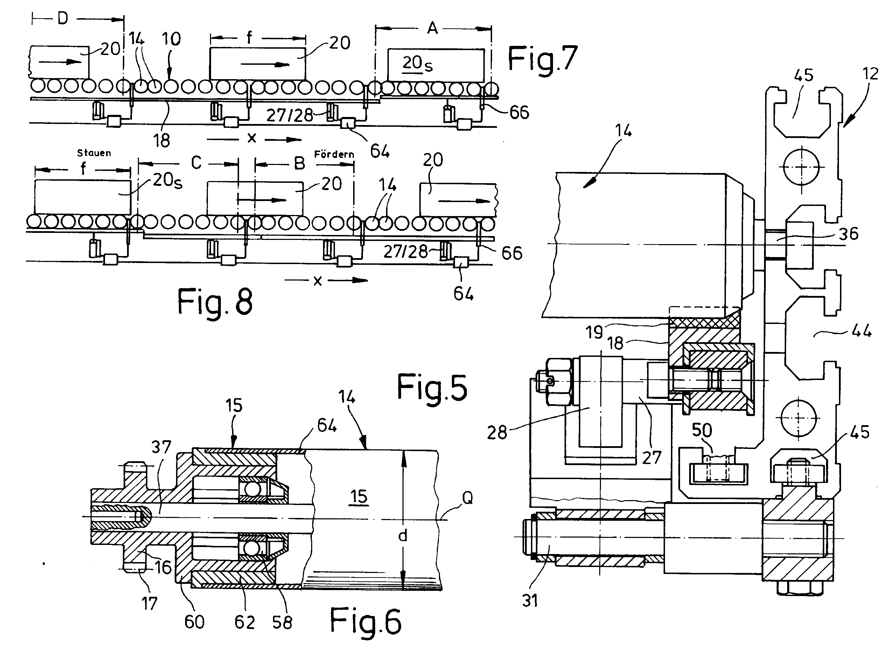

Eine Gruppe A von acht einander zugeordneten Rollen 14 wird von einem -- parallel zu den Seitenwänden 12 gerichteten -- Brems- oder Druckbalken 18 untergriffen, dessen beispielsweise Länge e von etwa 390 mm von der Länge f des -- in Fig. 7, 8 mit 20 bezeichneten -- zu fördernden Stückgutes abhängt; der Druckbalken 18 soll die Anzahl von Rollen 14 stillsetzen, auf denen sich das jeweilige Fördergut 20 befindet, um ein Auflaufen auf ein in Förderrichtung x davor plötzlich stehenbleibendes Fördergut 20s -- und damit einen Staudruck -- zu verhindern. Dazu wird die Rollenbahn 10 elektronisch abgetastet; beim Stillstand jenes Fördergutes 20s wird dem Druckbalken 18 der in Förderrichtung x nachfolgenden Rollengruppe (B in Fig. 8) ein Bremssignal übermittelt - dieser Druckbalken 18 wird in eine Bremsstellung angehoben, wie sie beispielsweise die Fig. 3 und 5 verdeutlichen.

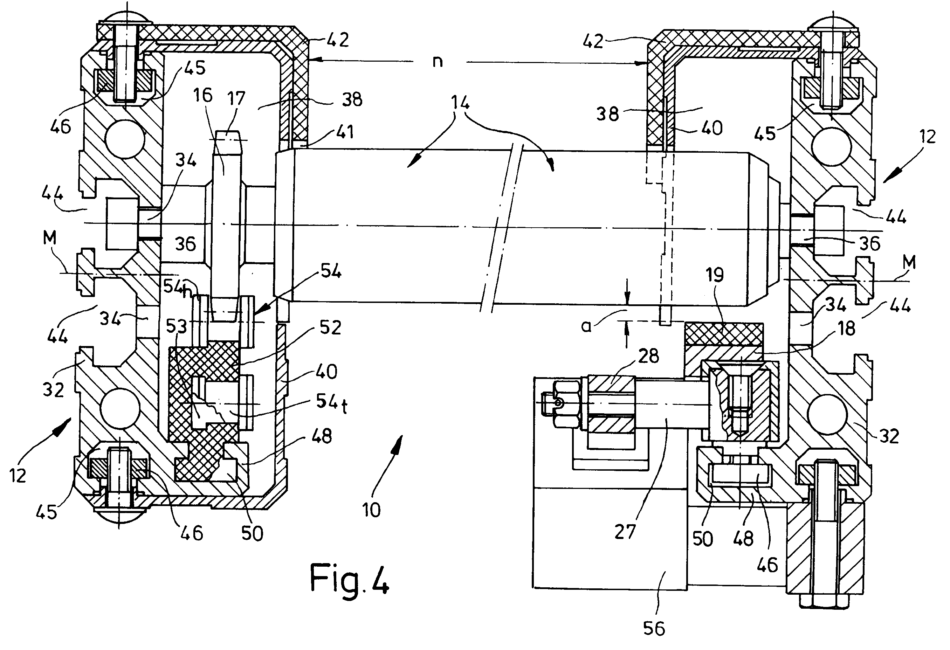

In Förderstellung nach Fig. 3 steht die Oberfläche eines elastischen Bremsbelages 19 des Druckbalkens 18 gemäß Fig. 2, 4 in einem Abstand a unterhalb der Rollen 14. Dabei sitzen in einem Winkel w zur Oberfläche des Druckbalkens 18 geneigte Keilflächen 22 von Führungsschuhen 23, welche an der Unterseite des Druckbalkens 18 festgelegt sind, auf Gegenkeilflächen 24 von Sockelklötzen 25 eines Rollengestells 11.

Sollen die im Ausführungsbeispiel der Fig. 2 oberhalb dieses Druckbalkens 18 umlaufenden Rollen 14 der Rollengruppe A -- oder B, C, D -- stillgesetzt werden, wird der Druckbalken 18 durch einen an ihm mittels einer Achse 27 angelenkten Kolbens 28 eines Druckzylinders 30 angehoben. Letzterer ist in einem Winkel t von etwa 30°, welcher dem Neigungswinkel w der Keilflächen 22, 24 entspricht, geneigt und mit dem Rollengestell 11 durch eine Gelenkachse 31 verbunden. Beim Ausfahren des Kolbens 28 gleiten die Keilflächenpaare 22/24 aneinander, wobei die Keilflächen 22 der balkenseitigen Führungsschuhe 23 angehoben werden, bis die Rollen 12 in den Bremsbelag 20 eingetaucht sind und durch Reibschluß stehenbleiben. Die Führung der geschilderten Hubbewegung durch die an den Balkenenden vorgesehenen Keilflächenpaare 22/24 -- etwa parallel zur Drehrichtung z der Rollen 14 bzw. in dieser Drehrichtung z -- gewährleistet ein festes Anpressen des Bremsbelages 20 an die Umfangsflächen 15 der Rollen 14 bei verhältnismäßig geringer Krafteinleitung.

Fig. 4 zeigt die beiden beispielsweise Strangpreßprofile 32 enthaltenden Seitenwände 12. In Lagerbohrungen 34 der Strangpreßprofile 32 ruhen Lagerzapfen 36 einer Tragachse 37 der Rollen 14 mit Spiel. An den Strangpreßprofilen 32 sind unter Begrenzung eines Aufnahme- oder Wandraumes 38 Rinnenprofile 40 angeschraubt und auf diese oberhalb der Rollen 14 für diese teilkreisförmige Ausschnitte 41 anbietende Abdeckschalen 42 festgelegt, welche die bereits erwähnte wirksame Länge n der Rollen 14 bestimmen.

Die Querschnitte der -- hinterschnittene Zugriffnuten 44 für die Lagerbohrungen 34 sowie dazu rechtwinkelige Einsatznuten 45 für Befestigungsmittel 46 der Rinnenprofile 40 anbietenden -- Strangpreßprofile 32 sind jeweils beidseits einer Längsmittellinie M gleichförmig mit Ausnahme eines an nur einer der Stirnflächen seitlich abragenden Nutschenkels 48. Dieser enthält gemäß Fig. 4, 5 eine sich aufwärts öffnende hinterschnittene Haltenut 50 für eine Etagenschiene 52 aus Polyäthylen; in Längsausnehmungen 53 dieser Etagenschiene 52 laufen die bei 54h bzw. 54t angedeuteten Trume einer endlosen Antriebskette 54, deren Antriebsstern aus Gründen der Übersichtlichkeit nicht wiedergegeben ist. Das Obertrum 54h kämmt mit den Zähnen 17 der Stirnräder 16 der Rollen 14.

An der -- in Fig. 4 rechten -- anderen Seitenwand 12 nimmt jene Haltenut 50 Befestigungsmittel 46 des Kolbens 28 und der Sockelklötze 25 auf; der Druckzylinder 30 ist über einen Lagerklotz 56 in der Einsatznut 45 festgelegt.

Gemäß Fig. 6 ist das eine Ende der Rolle 14 auf der durchgehenden Tragachse 37 mittels eines Kugellagers 58 und einer Gleitbuchse 60 angebracht, welche das Stirnrad 16 enthält und unter Zwischenschaltung einer Futterbüchse 62 ein Rohr 64 als Rollenwand trägt.

Die Fig. 7, 8 veranschaulichen zwei Fördervorgänge; die mit Richtungspfeilen kenntlich gemachten Fördergüter 20 werden über die von der kontinuierlich laufenden Rollenkette 54 angetriebene Rollenbahn 10 geführt und überfahren dabei die einzelnen Gruppen oder Sektionen D, C, B, A. Deren Länge ergibt sich aus der maximalen Fördergutlänge f sowie dem gewünschten Freiraum zwischen den einzelnen Fördergütern 20.

Bei einem Stauvorgang wird jede -- einen Druckbalken 18 als Andrückeinheit, die Pneumatikzylindereinheit 27/28, ein Magnetventil 64, einen Sensor 66 sowie ein Logikelement aufweisende -- Sektion A, B, C, D über den Sensor 66 berührungslos abgefragt. Das Logikelement überprüft, ob der in Förderrichtung x folgende Stauplatz frei oder belegt ist. Ist der Platz frei, wird das Fördergut 20 weitergefördert. Bei belegtem Platz wird die Kolben-/Zylinder-Einheit 27/28 durch das Logikelement angesteuert, d.h. der Druckbalken 18 angehoben und an die Rollen 14 gepreßt; das Fördergut 20 wird auf der entsprechenden Sektion A bis D angehalten sowie gleichzeitig das "Sektion-Belegt-Signal" an den folgenden Stauplatz weitergegeben, so daß der Stauvorgang weitergehend ablaufen kann.

Vom Abgabeplatz einer Staustrecke abgesehen, ist für die beschriebenen Funktionsabläufe keine Steuerung erforderlich. Zum Weiterfördern des Fördergutes 20 muß von einer Steuerung ein Elektromagnetventil 64 angesteuert werden, welches das elektrische Signal an das Logikelement übergibt. Dank der beschriebenen kettengetriebenen Friktionsrollenbahn 10 mit z.B. lichtschrankengesteuerten Bremssektionen A bis D werden selbst empfindlichste Fördergüter 20 schonend befördert, da deren Berührung untereinander ausgeschlossen bleibt.

Nachfolgend seien einige Daten zu einer bevorzugten Ausgestaltung angegeben:

### Technische Daten:

- Bahnlänge:: max. 15 000 mm;
- Nutzbreite:: min. 100 mm bis max. 600 mm;
- Rollenteilung:: min. 52 mm;
- Förderrollen:: wartungsfreie, kugelgelagerte Stahlrollen wahlweise blank, verzinkt oder mit PVC-Schlauch 2 mm
Standardausführung: 40 x 1,25 mm
Sonderausführung: 50 x 1,5 mm
- Antrieb:: über komplette Antriebsstation und Getriebemotor 220/380 V, 50 Hz
- Fördergeschwindigkeit:: min 3 m/min bis max. 18 m/min
- Fördergut:: alle rollenbahnfähigen Fördergüter
- Belastung:: Einzelgewicht pro Sektion
max. 40 kg
Gesamtbelastung pro m max. 100 kg
- Schaltelement:: Magnetventil / berührungsloser Sensor
- Luftversorgung:: Druckluft 5 bis 6 bar.

## Patentansprüche

1. Vorrichtung zum Fördern von Stückgut auf parallel und drehbar gelagerten Rollen einer Rollenbahn, wobei eine Gruppe aus mehreren einander benachbarten Rollen von einer in Förderrichtung verlaufenden Bremseinrichtung untergriffen ist, die von einem Kraftspeicher bewegbar sowie an die Rollen der Gruppe kraftschlüssig anlegbar ist, wobei mehrere Gruppen (A, B, C, D) von Rollen (14) mit jeweils einer sie unterfangenden Bremseinrichtung hintereinandergeschaltet sind,
dadurch gekennzeichnet,
daß die balkenartige Bremseinrichtung (18) während einer Hubbewegung an wenigstens einem Paar zu ihr geneigter Keilflächen (22) geführt ist.

2. Vorrichtung nach Anspruch 1, dadurch gekennzeichnet, daß zumindest eine der Gruppen (A, B, C, D) mit einer elektronischen Überwachungseinrichtung (33), beispielsweise einer Lichtschranke, mittels deren bei Förderstau ein Signal für eine Steuerung auslösbar ist, versehen und von der Steuerung bei Förderstau die Bremseinrichtung (18) betätigbar ist.

3. Vorrichtung nach Anspruch 1 oder 2, gekennzeichnet durch eine Kolben/Zylinder-Einheit (28/30) als Kraftspeicher, die mit der Steuerung verbunden und bei Förderstau von dieser betätigbar ist.

4. Vorrichtung nach einem der Ansprüche 1 bis 3, dadurch gekennzeichnet, daß die als Druckbalken ausgebildete Bremseinrichtung (18) etwa an jedem ihrer Enden wenigstens eine der zur Rollenbahn (10) geneigten Keilflä chen (22) aufweist, die auf einer Gegengleitfläche (24) eines die Rollen (14) tragenden Rollengestells (11) gleitbar lagert, wobei der Druckbalken durch die relative Bewegung der Keilflächenpartner (22/24) in einer Schubrichtung anhebbar sowie gegenläufig absenkbar angeordnet ist.

5. Vorrichtung nach einem der Ansprüche 1 bis 4, dadurch gekennzeichnet, daß die Neigung der Keilflächen (22) in Drehrichtung (z) der Rollen (14) aufwärts gerichtet ist, und/oder daß der Kolben (28) der Kolben/Zylinder-Einheit (28/30) etwa parallel zu den Keilflächen (22) in einem Winkel (t) geneigt verläuft.

6. Vorrichtung nach einem der Ansprüche 1 bis 5, dadurch gekennzeichnet, daß jedem Druckbalken (18) und seiner Kolben/Zylinder-Einheit (28/30) die Überwachungseinrichtung (33) sowie ein Logikelement zugeordnet sind, von welchem bei einem Signal "belegt" die Kolben/Zylinder-Einheit ausschiebbar ist, wobei gegebenenfalls die Überwachungseinrichtung ein Sensor ist.

7. Vorrichtung nach wenigstens einem der Ansprüche 1 bis 6, dadurch gekennzeichnet, daß die in Förderrichtung (x) vorderste Gruppe (A) von Rollen (14) mit der Überwachungseinrichtung bzw. dem Sensor (33) versehen ist und die nachfolgenden Gruppen (B, C, D) an die Steuerung der ersten Gruppe intern angeschlossen sind.

8. Vorrichtung nach wenigstens einem der Ansprüche 1 bis 7, mit Seitenwänden, dadurch gekennzeichnet, dass in Förderrichtung verlaufende Seitenwände (12) Lager für die Rollen enthalten und der Druckbalken (18) außerhalb der wirksamen Länge (n) der Rollen (14) innerhalb der Seitenwand angeordnet ist.

9. Vorrichtung nach wenigstens einem der Ansprüche 1 bis 8, dadurch gekennzeichnet, daß die beidends in einem Strangpreßprofil (32) gelagerte Rolle (14) drehbar auf einer endwärts festliegenden Tragachse (37) angeordnet ist, wobei gegebenenfalls das Strangpreßprofil (32) der Seitenwand (12) mit einem ein von den Rollen (14) durchsetzten Rinnenprofil (40) einen Aufnahmeraum (38) für den Druckbalken (18) oder Stirnräder (16) der Rollen bildet.

10. Vorrichtung nach wenigstens einem der Ansprüche 1 bis 9, dadurch gekennzeichnet, daß die Rollen (14) der Gruppe (A, B, C, D) durch einen Förderstrang (54) angetrieben sind, der die Stirnräder (16) der Rollen form- oder reibschlüssig tangiert, wobei gegebenenfalls eine endlose Antriebskette als Förderstrang (54) dient, deren Obertrum (54h) mit den Stirnrädern (16) zusammenwirkt.

11. Vorrichtung nach wenigstens einem der Ansprüche 1 bis 10, dadurch gekennzeichnet, daß der endlose Förderstrang (54) in einem Einsatzprofil (52) umlaufend angeordnet ist.

12. Vorrichtung nach wenigstens einem der Ansprüche 1 bis 11, dadurch gekennzeichnet, daß das Einsatzprofil (52) in einer Haltenut (50) eines vom Strangpreßprofil (32) abragenden Schenkels (48) festgelegt ist.

13. Verfahren zum Fördern von Stückgut mit einer Vorrichtung nach wenigstens einem der Ansprüche 1 bis 12, dadurch gekennzeichnet, daß bei einem Stauvorgang jeder der Sektionen (A bis D) über einen Sensor (33) berührungslos abgefragt, das Signal einem Logikelement zugeführt und der Status der in Förderrichtung folgenden Sektion festgestellt wird.

14. Verfahren nach Anspruch 13, dadurch gekennzeichnet, daß bei belegter Folgesektion der Kraftspeicher (28/30) der Bremseinrichtung (18) betätigt und diese angehoben wird, wobei gegebenenfalls von der gebremsten Sektion an die gegen die Förderrichtung (x) folgende Sektion das Belegtsignal weitergegeben wird.

## Claims

1. Device for conveying piece goods on parallel and rotatably mounted rollers of a roller conveyor, in which a group consisting of a plurality of adjacent rollers is engaged from below by a braking device which extends in the conveying direction, can be moved by an energy accumulator and can be applied non-positively to the rollers of the group, a plurality of groups (A B, C, D) of rollers (14) each with a braking device engaging them from below being connected in series, characterised in that the beam-shaped braking device (18) is guided on at least one pair of wedge-shaped surfaces (22) inclined thereto during a stroke.

2. Device according to claim 1, characterised in that at least one of the groups (A, B, C, D) is provided with an electronic monitoring device (33), e.g. a light barrier, by means of which a signal for a control means can be triggered in the event of a build-up of goods, and the braking device (18) can be actuated by the control means in the event of a build-up.

3. Device according to claim 1 or claim 2, characterised by a piston/cylinder unit (28/30) as the energy accumulator which is connected to the control means and can be actuated by the latter in the event of a build-up.

4. Device according to one of claims 1 to 3, characterised in that the braking device (18) in the form of a compressed beam is provided, e.g. at each of its ends with at least one of the wedge-shaped surfaces (22) inclined towards the roller conveyor (10) and slidably mounted on a mating sliding surface (24) of a roller frame (11) carrying the rollers (14), the compressed beam being arranged so that it can be raised in a direction of thrust and lowered in the opposite direction by the relative movement of the pair of wedge-shaped surfaces (22/24).

5. Device according to one of claims 1 to 4, characterised in that the inclination of the wedge-shaped surfaces (22) is directed upwards in the direction of rotation (z) of the rollers (14) and/or that the piston (28) of the piston/cylinder unit (28/30) is inclined at an angle (t) approximately parallel to the wedge-shaped surfaces (22).

6. Device according to one of claims 1 to 5, characterised in that the monitoring device (33) and a logic element are associated with each compressed beam (18) and its piston/cylinder unit (28/30), by means of which the piston/cylinder unit can be displaced in the event of a "busy" signal, the monitoring device possibly being a sensor.

7. Device according to at least one of claims 1 to 6, characterised in that the foremost group (A) of rollers (14) in the conveying direction (x) is provided with the monitoring device or sensor (33) and the following groups (B, C, D) are internally connected to the control means of the first group.

8. Device according to at least one of claims 1 to 7, with side walls, characterised in that side walls (12) extending in the conveying direction contain bearings for the rollers and the compressed beam (18) is arranged within the side wall outside the effective length (n) of the rollers (14).

9. Device according to at least one of claims 1 to 8, characterised in that the roller (14) mounted at both ends in an extruded profile (32) is rotatably arranged on a bearing axle (37) fixed at its ends, the extruded profile (32) of the side wall (12) possibly forming a receiving space (38) for the compressed beam (18) or spur gears (16) of the rollers together with a channel-shaped profile (40) traversed by the rollers (14).

10. Device according to at least one of claims 1 to 9, characterised in that the rollers (14) of the group (A, B, C, D) are driven by a conveyor strand (54) meshing positively or non-positively with the spur gears (16) of the rollers, an endless drive chain possibly serving as the conveyor strand (54), its upper side (54h) cooperating with the spur gears (16).

11. Device according to at least one of claims 1 to 10, characterised in that the endless conveyor strand (54) is arranged to rotate in an insert profile (52).

12. Device according to at least one of claims 1 to 11, characterised in that the insert profile (52) is fixed in a retaining groove (50) in an arm (48) projecting from the extruded profile (32).

13. Method of conveying piece goods with a device according to at least one of claims 1 to 12, characterised in that, in the event of a build-up of goods, each of the sections (A to D) is scanned in a contactless manner by a sensor (33), the signal is fed to a logic element and the status of the following section in the conveying direction is established.

14. Method according to claim 13, characterised in that, if the following section is busy, the energy accumulator (28/30) of the braking device (18) is actuated and the braking device is raised, the busy signal possibly being transmitted from the braked section to the following section in the conveying direction (x).

## Revendications

1. Dispositif pour transporter un produit en morceaux, sur des rouleaux, montés parallèlement à rotation d'une piste à rouleaux, un groupe constitué de plusieurs rouleaux voisins étant sollicité par le dessous par un organe de freinage s'étendant dans la direction de transport et étant susceptible d'être déplacé par un accumulateur de force, et d'être appliqué à force sur les rouleaux du groupe, plusieurs groupes (A, B, C, D) de rouleaux (14) ayant chacun un organe de freinage les sollicitant par le dessous, étant mis en action les uns après les autres,
caractérisé en ce que
l'organe de freinage (18) du genre poutre est guidé, pendant un déplacement d'avance, sur au moins une paire de surfaces en coin (22) inclinées par rapport à lui.

2. Dispositif selon la revendication 1, caractérisé en ce qu'au moins un des groupes (A, B, C, D) est muni d'un organe de surveillance (33) électronique, par exemple une barrière lumineuse, au moyen de laquelle, en cas d'arrêt dans le transport, un signal destiné à une commande est susceptible d'être déclenché, l'organe de freinage (18) étant susceptible d'être actionné par la commande en cas d'arrêt du transport.

3. Dispositif selon la revendication 1 ou 2, caractérisé par une unité à piston/cylindre (28/30) faisant office d'accumulateur de force, reliée à la commande et susceptible d'être actionnée par celle-ci en cas d'arrêt du transport.

4. Dispositif selon l'une des revendications 1 à 3, caractérisé en ce que l'organe de freinage (18) réalisé sous la forme d'une poutre de pressage présente, par exemple à chacune de ses extrémités, au moins l'une des surfaces en coin (22), inclinées par rapport à la piste à rouleaux (10), montée de façon coulissante sur une contre-surface de glissement (24) d'un bâti à rouleaux portant les rouleaux (14), la poutre de pressage étant disposée de façon à pouvoir être soulevée dans une direction de poussée et respectivement être abaissée en sens inverse, par le déplacement relatif des partenaires des surfaces en coin (22/24).

5. Dispositif selon l'une des revendications 1 à 4, caractérisé en ce que l'inclinaison des surfaces en coin dans le sens de rotation (z) des rouleaux (14) est orientée vers le haut, et/ou en ce que le piston (28) de l'unité à piston/cylindre (28/30) est inclinée à peu près parallèlement aux surfaces en coin (22), sous un angle (t).

6. Dispositif selon l'une des revendications 1 à 5, caractérisé en ce qu'à chaque poutre de pressage (18) et à son unité à piston/cylindre (28/30) sont associés l'organe de surveillance (33) ainsi qu'un élément logique à partir duquel, en cas de signal "occupé", l'unité à piston/cylindre (28/30) est susceptible d'être déployée, le cas échéant l'organe de surveillance étant un capteur.

7. Dispositif selon au moins l'une des revendications 1 à 6, caractérisé en ce que le groupe (A), le plus à l'avant dans la direction de transport (x), des rouleaux (14), est doté de l'organe de surveillance respectivement du capteur (33), et les groupes (B, C, D) suivants sont raccordés de façon interne à la commande du premier groupe.

8. Dispositif selon au moins l'une des revendications 1 à 7, équipé de parois latérales, caractérisé en ce que des parois latérales (12) s'étendant dans la direction de transport contiennent des paliers destinés aux rouleaux et en ce que la poutre de pressage (18) est disposée à l'extérieur de la longueur (n) efficace des rouleaux (14), à l'intérieur de la paroi latérale.

9. Dispositif selon au moins l'une des revendications 1 à 8, caractérisé en ce que le rouleau (14), monté aux deux extrémités dans un profilé extrudé (32), est disposé rotatif sur un axe support (37) fixé aux extrémités, et en ce que le cas échéant le profilé extrudé (32) de la paroi latérale (12) constitue avec un profilé de rainure (40), traversé par les rouleaux (14), un espace de logement (38) pour la poutre de pressage (18) ou des zones d'engrenage frontales (16) des rouleaux.

10. Dispositif selon au moins l'une des revendications 1 à 9, caractérisé en ce que les rouleaux (14) du groupe (A, B, C, D) sont entraînés par un cordon de transport (54), qui tangente les roues d'engrenage frontales (16) des rouleaux, en établissant une liaison par ajustement de forme ou par friction, en ce que le cas échéant une chaîne d'entraînement continue, dont la partie supérieure de maillon (54h) coopère avec les roues d'engrenage frontales (16), sert de cordon de transport.

11. Dispositif selon au moins l'une des revendications 1 à 10, caractérisé en ce que le cordon de transport (54) continu est disposé en circulation dans un profilé rapporté (52).

12. Dispositif selon au moins l'une des revendications 1 à 11, caractérisé en ce que le profilé rapporté (52) est fixé dans une rainure de retenue (50) appartenant à une branche (48) faisant saillie du profilé extrudé (32).

13. Procédé de transport d'un produit en morceaux, avec un dispositif selon au moins l'une des revendications 1 à 12, caractérisé en ce qu'en cas de processus d'arrêt du trafic, chacune des sections (A à D) est interrogée sans contact par l'intermédiaire d'un capteur (33), le signal est amené à un élément logique et l'état de la section subséquente dans la direction de transport est constaté.

14. Procédé selon la revendication 13, caractérisé en ce que, lorsqu'une section subséquente est occupée, l'accumulateur de force (28/30) de l'organe de freinage (18) est actionné et celui-ci est soulevé, le cas échéant le signal d'occupation étant retransmis à la section placée à l'amont dans la direction de transport (x), par la section freinée.
